Europäisches Patentamt

European Patent Office

Office européen des brevets

(11) Publication number: **0 133 787**
A1

## (12) EUROPEAN PATENT APPLICATION

(21) Application number: 84305162.4

(22) Date of filing: 30.07.84

(51) Int. Cl.⁴: **F 16 L 9/18**
**F 16 L 39/00, F 16 L 55/12**

(30) Priority: 11.08.83 GB 8321668

(43) Date of publication of application:
06.03.85 Bulletin 85/10

(84) Designated Contracting States:
DE FR GB

(71) Applicant: NATIONAL NUCLEAR CORPORATION LIMITED
1 Stanhope Gate
London W1A 1EH(GB)

(72) Inventor: Lee, David Arthur
4 Rawlinson Road
Southport Merseyside(GB)

(74) Representative: Collingwood, Anthony Robert
Patents Branch United Kingdom Atomic Energy
Authority 11 Charles II Street
London SW1Y 4QP(GB)

(54) Radially expansible and contractible annular elements.

(57) An radially expansible annular element (4) is provided for bridging the gap between a pair of substantially coaxial members (1, 2) so as to provide a sealing or annular valve action or so as to act as a clutch device to transmit motion between said members (1, 2). The element (4) comprises a hollow moulding of elastomeric material enclosing a substantially incompressible material such as a liquid, a gel or a solid which may be in particulate form with or without a lubricant. The application of axially directed compressive or tensile mechanical forces to the element via rigid rings (10) effects radial expansion or contraction of the element whereby, in the former case, the element can close the gap between the members (1, 2).

Fig. 1.

Fig. 2.

1

## Radially expansible and constractible annular elements

This invention relates to a radially expansible and contractible annular element and has particular but not exclusive application to the employment of such elements in the making and breaking of a closure of the annular gap between two tubes disposed substantially coaxially.

Annular elements in the form of seals capable of the above application are known, are commercially available and operate on the principle of inflation and deflation. However they require external pressurising and evacuation equipment and are susceptible to failure by rupture of the wall of the hollow seal.

According to the invention there is provided an assembly for bridging the gap between a pair of substantially coaxial members, said assembly comprising a deformable annular element which, in response to being expanded or contracted in the axial direction, undergoes contraction or expansion respectively in the radial direction, and means for applying an external force or forces to said element to effect axial expansion and/or contraction thereof.

The element may be hollow circular in cross-section and the hollow centre may be filled with a substantially incompressible material such as a liquid, a gel or an elastomer, with or without a partial filling or partial fillings of solid annular material. Where the latter is or are provided, it or they may be secured to additional annular solid material to which is applied said mechanical force in an axial direction to cause deformation of the element as aforesaid.

In another alternative, the hollow of the element may, in addition to being filled with a liquid, a gel or an elastomer, contain a plurality of resilient members arranged to apply opposed forces in axial direction to the interior of the element to assist in restoring the element to its non-expanded condition after removal of the mechanical force for establishing the seal.

Constructional examples embodying the invention will now be described with reference to the accompanying diagrammatic drawings, wherein:-

Figure 1 is a side view in medial section and illustrates one construction of annular element which is primarily intended as a seal,

Figures 2 and 3 are similar views and illustrate different operative positions of the seal shown in Figure 1,

Figures 4, 5 and 6 are similar views to that of Figure 1 and illustrate modifications to the construction shown in Figures 1-3, and

Figures 7, 8 and 9 are similar views to that of Figure 1 and illustrate second, third and fourth constructions of seal, respectively.

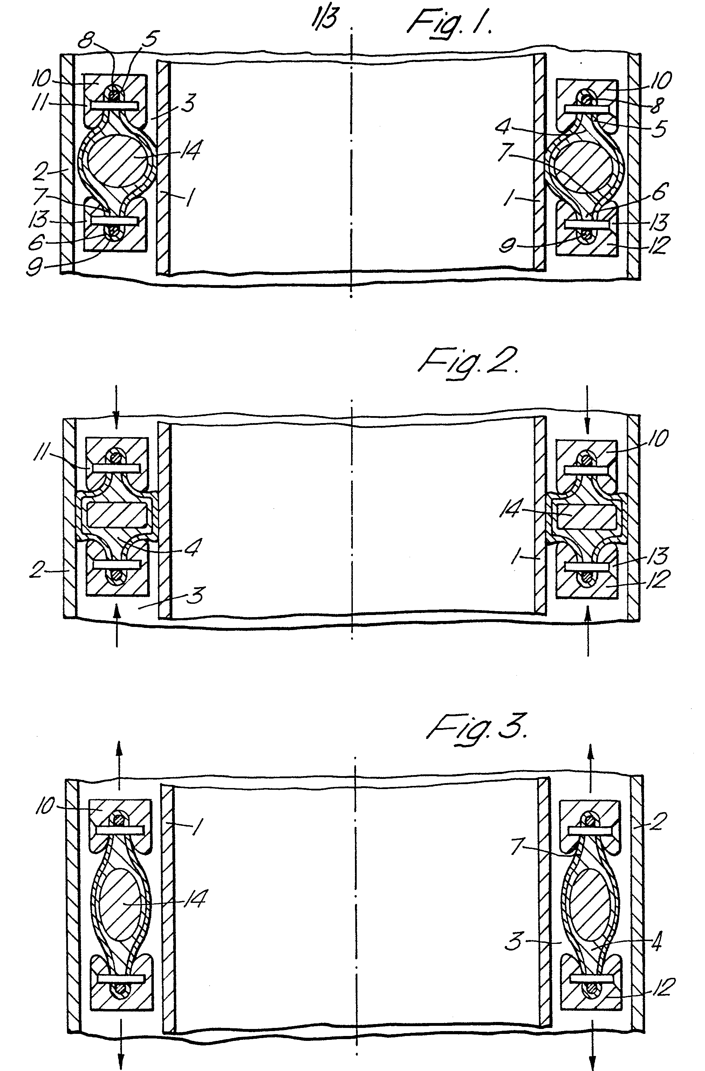

Referring to the drawings, in which like reference numerals refer to like parts, firstly to Figure 1, a tube 1 is disposed coaxially within a tube 2 of greater diameter and provides an annular gap 3 therebetween. An annular sealing member 4 of moulded elastomeric material is hollow, is substantially circular in cross-section, has axial extensions 5,6, a continuous fabric reinforcement envelope 7 incorporated within the moulded sealing member wall, including the extensions 5,6, and has metal insert rings 8,9 in the extensions 5,6 respectively, the reinforcement envelope 7 extending around the rings 8, 9 so as to contain them. A substantially rigid annulus in the form of a metal ring 10 of inverted U cross-section embraces the extension 5 and is secured thereto either by bonding or as shown, at intervals by pins 11 disposed beneath the ring 8. Similarly, a second rigid annulus in the form of a metal ring 12 of U cross-section embraces the extension 6 and is secured thereto either by bonding or by pins 13 disposed at intervals and above the ring 9. The hollow interior 14 of the sealing member 4 is filled with incompressible material such as a liquid or gel or another elastomer.

There is provision (not shown) for selectively applying either a compressive force or a tensile force externally to the metal rings 10,12 so as either to force the sealing member 4 into the rectangular shape shown in

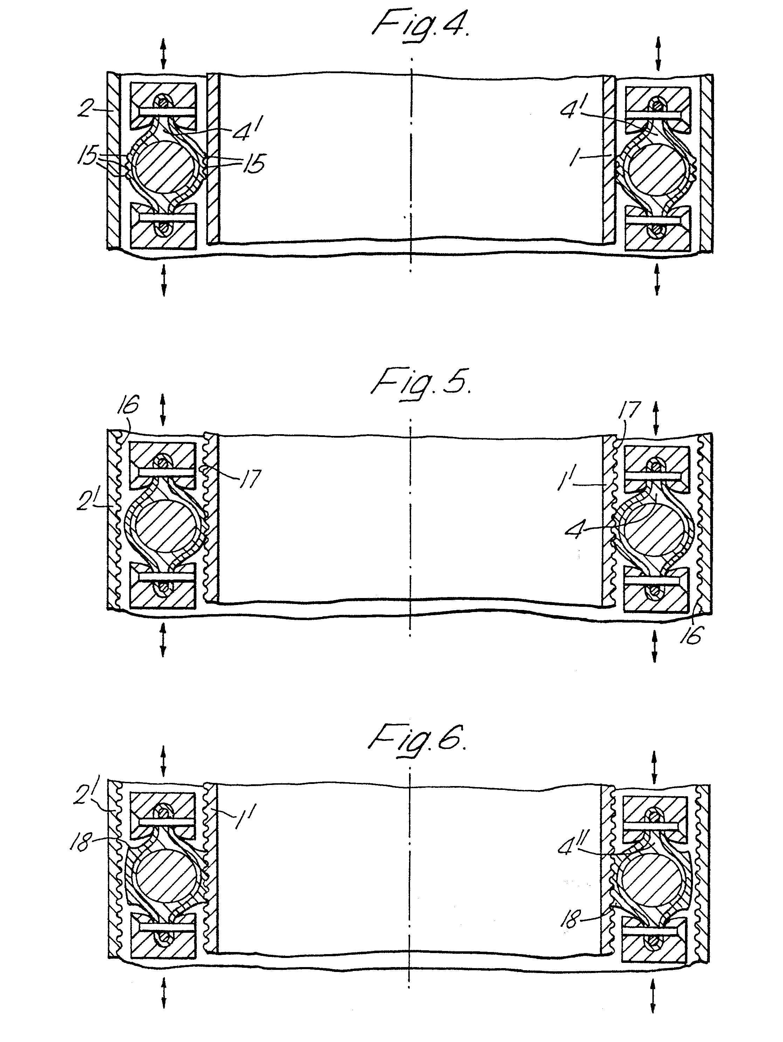

Figure 2 in which it makes surface-to-surface contact with the interior of tube 2 and the exterior of tube 1 and thus very effectively closes the annular gap 3, or to stretch the sealing member 4 into the position shown in Figure 3 in which it is clear of both tubes 1 and 2 and in which the annular gap 3 is effectively open. In the position shown in Figure 1, the sealing member 4 is substantially unstressed and contacts the exterior surface of tube 1 as an interference fit therewith but is clear of the interior surface of tube 2, thereby allowing a somewhat restricted passage across the seal. The interference fit causes the internal surface of the sealing member to be placed in tension when the sealing member is actuated which counteracts any tendency for the latter to crease or crinkle and thereby adversely affect seal performance. It is envisaged that the Figure 1 position will be arranged to prove adequate clearance for normal purposes with the Figure 3 position being employed over short periods for particular purposes such as removal and replacement of either of the tubes 1,2.

In modifications applicable to the construction shown in Figures 1-3, reference to Figure 4 shows that the external surfaces of the sealing member 4' are provided with circumferential ribs 15 on those parts which contact the tubes 1, 2 when the sealing member is compressed. This gives a higher ratio of contact pressure to axial compression force.

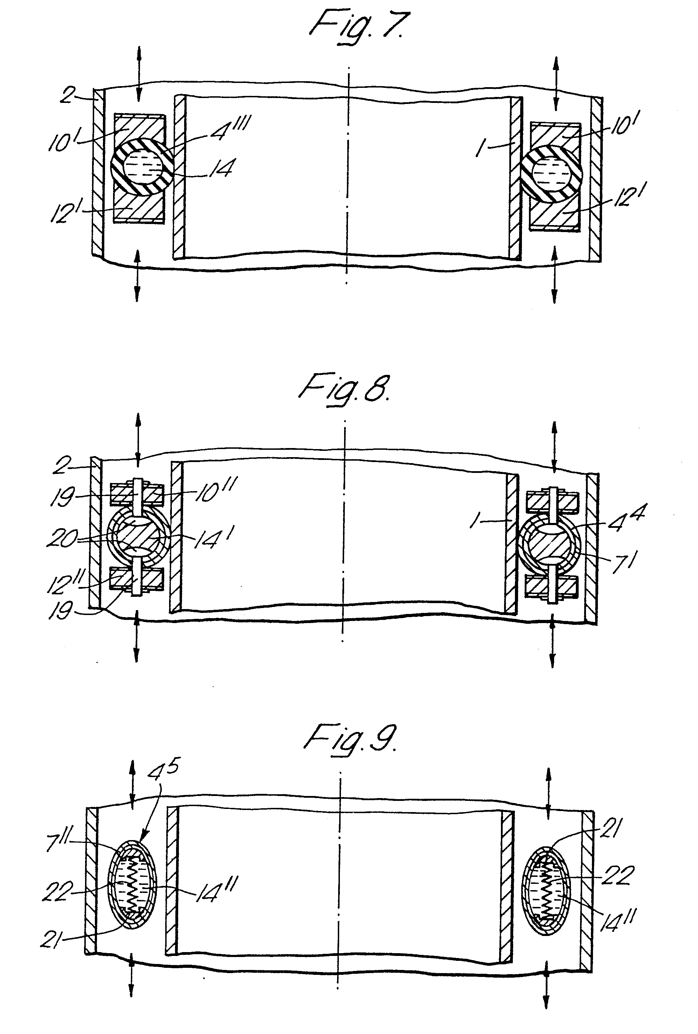

In Figure 5, the internal surface of tube 2' and the external surface of inner tube 1' are provided with circumferential ribs 16, 17 respectively. This gives higher seal contact pressures and helps to prevent extrusion of the sealing member.

In Figure 6, not only are the relevant surfaces of tubes 1', 2' provided with ribs 17, 16 as in the Figure 5 modification, but also the cross-section of the sealing member 4'' is made somewhat rectangular in cross-section in the unstressed state, which, in addition to the effects of the ribbed tube surfaces referred to above , also tends to produce a situation where deformation on compression provides lips 18 giving pressure assisted sealing.

Referring now to Figure 7, this shows how the seal member 4''' can be truly hollow circular in cross-section, have an incompressible centre filling 14 of liquid, gel or elastomer and have upper and lower rings 10', 12' bonded to the seal member 4'''.

Figure 8 also illustrates a truly hollow circular seal member $4^4$ but provided with a continuous fibre reinforcement envelope 7' embedded therein. The metal rings 10'', 12'' are secured to the sealing member $4^4$ by a plurality of circumferentially spaced circlips 19 secured to internal rings 20 accommodated within the hollow of the seal member $4^4$ together with filling of the remainder of the hollow with incompressible liquid gel or elastomer 14'.

Finally, Figure 9 illustrates another type of seal, which can be employed with any pair of suitable external rings for applying compression and possibly also tension, having a seal member $4^5$ again hollow circular in cross-section when unstressed, but which can assume a hollow oval cross-section when stressed as shown. The seal member $4^5$ has a continuous fibre reinforcement envelope 7", and contains within its hollow, as well as incompressible filling 14", a pair of internal metal rings 21 which locate a plurality of equally circumferentially spaced coil springs 22 which replace or implement tension employed for disengaging the seal. It is preferable to keep this kind of sealing member in axial compression when not employed for annular gap opening, so as to avoid continual stressing of the inner and outer walls thereof.

Other possible fillings for the hollow interior of sealing members are: multiple narrow-section rubber rings with lubricant occupying the remaining volume; continuous lengths of narrow section rubber cord, again with lubricant; and powder or granules with or without lubricant.

Annular seals as shown or described may have further application as a variable annular flow valve, the opening of which can be controlled according to the compression or tension force applied to the external metal rings.

A still further possible application is envisaged as a clutching device between relatively rotatable coaxial members. Firm contact of the seal member with both members as shown for example in Figure 2 hereof, can be employed for driving one member from the other, and release from drive being accomplished by releasing compression with or without applying tension to release the engagement of the seal member with one or both of the members to allow relative rotation. It is thought that for this application, a stack of seal members would be preferable in order to ensure effective driving engagement with high torques.

40791

Claims

1. An assembly for bridging the gap between a pair of substantially coaxial members (1, 2), said assembly comprising a deformable annular element (4) which, in response to being expanded or contracted in the axial direction, undergoes contraction or expansion respectively in the radial direction, and means for applying an external force or forces to said element to effect axial expansion and/or contraction thereof.

2. An assembly as claimed in Claim 1 in which said element (4), when expanded radially, serves to sealingly engage with said members (1, 2) and thereby acts as a seal to close the gap therebetween.

3. An assembly as claimed in Claim 1 in which the force-applying means is operable to control the degree of radial expansion and/or contraction of said element (4) whereby the element acts as a variable annular flow control valve.

4. An assembly as claimed in Claim 1 in which one of said members (1, 2) is movable by drive means whereby the element acts as a clutch device for transmitting movement from said one member to the other.

5. An assembly as claimed in any one of Claims 1-4 in which the element (4) is elastically deformable.

6. An assembly as claimed in any one of Claims 1-5 in which th annular element (4) encloses a substantially incompressible material such as a liquid, a gel or a solid which can be in particulate form.

7.    An assembly as claimed in Claim 6 in which the element (4) comprises a hollow annulus of elastomeric material enclosing said substantially incompressible material.

8.    An assembly as claimed in any one of Claims 1-7 in which the element (4) is located between a pair of substantially rigid annuli through the agency of which the element may be subjected to axial and/or tensile loading by said force-applying means.

9.    An assembly as claimed in any one of Claims 1 - 8 in which at least those surface portions of the element (4), which are intended to contact said members (1,2) in use, are provided with elastically-deformable projections.

10.    An assembly as claimed in any one of Claims 1 - 9 in which the inside diameter of the element (4) is designed to be an interference fit around the exterior of the inner member (1).

40791

0133787

Fig. 1.

Fig. 2.

Fig. 3.

Fig.4.

Fig.5.

Fig.6.

**Fig. 7.**

**Fig. 8.**

**Fig. 9.**

**European Patent Office**

**EUROPEAN SEARCH REPORT**

| DOCUMENTS CONSIDERED TO BE RELEVANT | | | EP 84305162.4 |
|---|---|---|---|

| Category | Citation of document with indication, where appropriate, of relevant passages | Relevant to claim | CLASSIFICATION OF THE APPLICATION (Int Cl 4) |
|---|---|---|---|
| Y | <u>DE - A1 - 2 533 933</u> (SCHMITZ) <br> * Fig. 2-5 * <br> -- | 1,2 | F 16 L   9/18 <br> F 16 L  39/00 <br> F 16 L  55/12 |
| Y | <u>US - A - 3 964 754</u> (MURAI) <br> * Totality * <br> ---- | 1,2 | |

**TECHNICAL FIELDS SEARCHED (Int. Cl.4)**

F 16 L

The present search report has been drawn up for all claims

| Place of search | Date of completion of the search | Examiner |
|---|---|---|
| VIENNA | 11-10-1984 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82